# EUROPEAN PATENT SPECIFICATION

(11) **EP 3 653 436 B1**
(45) Date of publication and mention of the grant of the patent: **28.07.2021**
(21) Application number: 19209576.8
(22) Date of filing: 15.11.2019
(51) Int. Cl.: B60Q 1/00, F21S 45/00

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 15.11.2018 IT 201800010369
(43) Date of publication of application: 20.05.2020
(73) Proprietor: Marelli Automotive Lighting Italy S.p.A. Con Socio Unico, 10078 Venaria Reale (TO) (IT)
(72) Inventor: TOSI, Paolo, 10078 VENARIA REALE (TO) (IT); FALESSI, Alessandro, 10078 VENARIA REALE (TO) (IT)
(74) Representative: Plebani, Rinaldo

(56) References cited:
- CN-U- 203 995 910
- DE-A1-102018 109 191
- FR-A1- 2 774 338
- GB-A- 2 332 307
- JP-A- 2008 103 252
- JP-A- 2017 098 057
- US-A1- 2018 010 752
- US-B1- 6 773 155

## Description

### Cross-reference to related applications

This patent application claims priority from Italian patent application no. 102018000010369 filed on 15/11/2018.

### Technical field of the invention

The present invention relates to a lighting device for vehicles, in particular a headlight for a vehicle, like a motor vehicle, wherein the electrical connection of a connector and of the relative electric cable, for example a power connector, is facilitated and made safer to prevent any accidental disconnection e.g. due to driving vibrations.

### Prior Art

As already known, a lighting device for vehicles, in particular a motor vehicle, comprises a cup-shaped casing housing at least one light source and a transparent element provided to close a front opening of the cup-shaped casing. The headlight is generally equipped with a first connector carried by the casing suitable for coupling with a second connector, complementary to the first connector and suitable for supplying the power supply to the light source. A headlight of the type mentioned above is shown in the German patent application DE102012102639 in the name of Hella KGaA.

Typically, the stable connection between the first and the second connectors is made by means of an interference fit connection between two bodies that interpenetrate each other. Snap-on connection devices acting between the facing portions of the two connectors can be used in order to improve the stability of the interference fit connection between the bodies. JP2008103252 *discloses the preamble of claim 1.*

### Summary of the invention

The object of the present invention is to further improve the stability of connection between the first and the second connector by preventing the vibrations on the vehicle from contributing to the even partial uncoupling between the first and the second connector.

The foregoing object is obtained by the present invention in that it relates to a lighting device for vehicles, in particular a motor vehicle, comprising a cup-shaped casing housing at least one light source and a transparent element provided to close a front opening of the cup-shaped casing, said headlight being provided with a first connector carried by said casing designed to be coupled with a second connector, complementary to the first connector and designed to supply the power supply to said light source, said second connector comprising an insulating casing provided with a rear wall from which a plurality of electric cables emerge; said casing integrally comprises a support bracket suitable for defining a seat for the stable housing of said first connector; said support bracket being provided with an abutment wall integrally connected with said support bracket; said abutment wall being movable between a rest position wherein the seat is accessible from the outside of the support bracket and a use position wherein said abutment wall is arranged to at least partially close said seat and faces the rear wall of the second connector; wherein: i)- the abutment wall is integrally connected to said support bracket through an integral portion having a reduced thickness with respect to the abutment wall to provide an integral hinge of the film-type; ii) - in said rest position said integral portion is not deformed; iii) - in said use position said integral portion is bent; iv) - connection means are arranged to provide a stable mechanical connection between at least an end portion of said abutment wall and the support bracket; v) - the connection means comprise a seat made in said support bracket, a threaded element designed to be screwed into said seat and provided with a stem that engages a through hole of said abutment wall and a head designed to be in abutment against the end portion said abutment wall.

### Brief Description of the Drawings

Further characteristics and advantages of the present invention will become clearer from the following description of two non-limiting embodiments thereof, carried out with reference to the figures of the annexed drawings, wherein:
Figure 1 shows, in a partial top view, a headlight for a vehicle, in particular a motor vehicle made according to the dictates of the present invention;
Figure 2 is a side perspective view of a detail of the vehicle headlight, in particular a motor vehicle made according to a first embodiment of the present invention;
Figure 3 is a side view of the detail of Figure 2;
Figure 4 is a front view of the detail of Figure 2;
Figure 5 is a side perspective view of a detail of the headlight for vehicles, in particular a motor vehicle made according to a second embodiment of the present invention; and
Figure 6 shows the detail of Figure 5.

### Detailed description

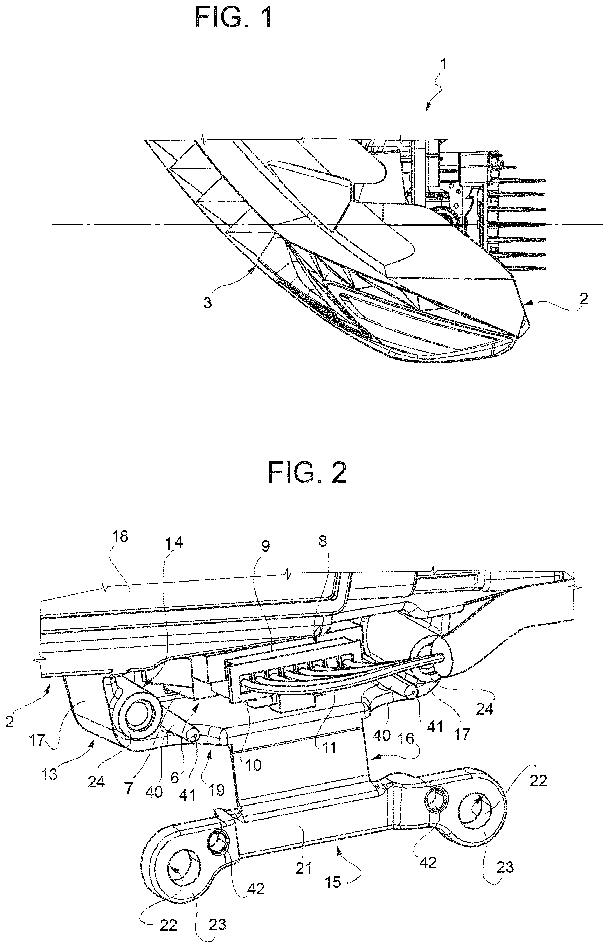

With reference to Figure 1, the number 1 indicates, as a whole, a headlight for a vehicle, in particular a motor vehicle, comprising a cup-shaped casing 2 housing at least a light source (not shown) and a transparent element 3 provided to close a front opening of the cup-shaped casing 2.

The headlight 1 is equipped with a first connector 6 (see Figure 1) carried by the casing 2 and connected with the electrical wiring (not shown) used to supply the light source. The first connector 6, of a known type, comprises an insulating parallelepiped casing 7 housing, in the shown non-limiting example, a plurality of electrical conductors, e.g. arranged in a comb-shape. It is clear that what will be seen is identically applicable also to single, single wire, connectors.

The first connector 6 is able to couple with a second connector 8, which is complementary to the first connector (for example it is of the female type if the first connector 6 is of the male type) and is able to supply the power supply from the electrical wiring arranged on board the vehicle.

The second connector 8 is also of a known type and comprises a substantially parallelepiped insulating casing 9 provided with an elongated rectangular rear wall 10 from which a plurality of electric cables 11 emerge, said electric cables being aligned along the longer sides of the elongated rectangular wall 10.

According to the present invention, the casing 2 integrally comprises a support bracket 13 designed to define a seat 14 for the stable housing of the first connector 6. This support bracket 13 is provided with an abutment wall 15 integrally connected with the support bracket 17 through an integral portion 16 having a reduced thickness with respect to the abutment wall 15 to provide an integral hinge of the film-type.

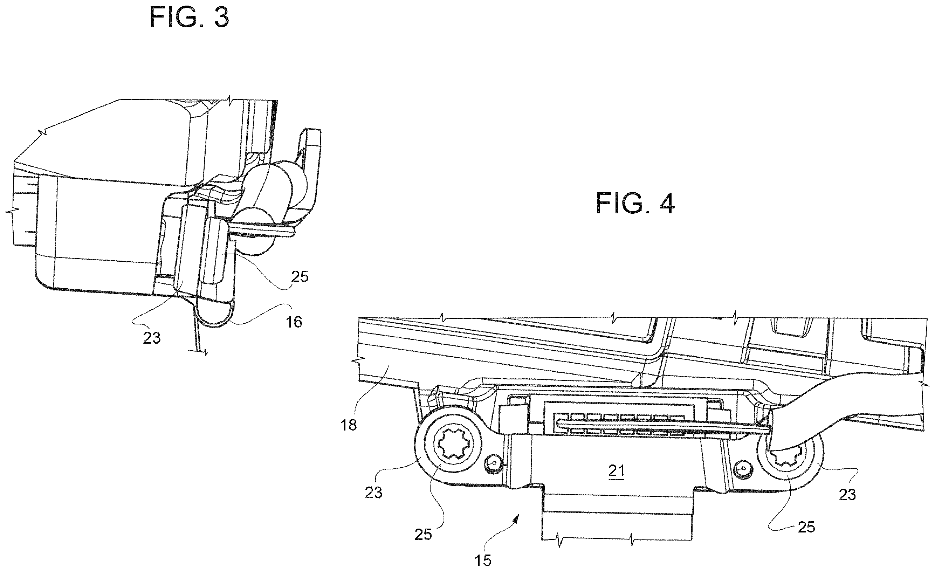

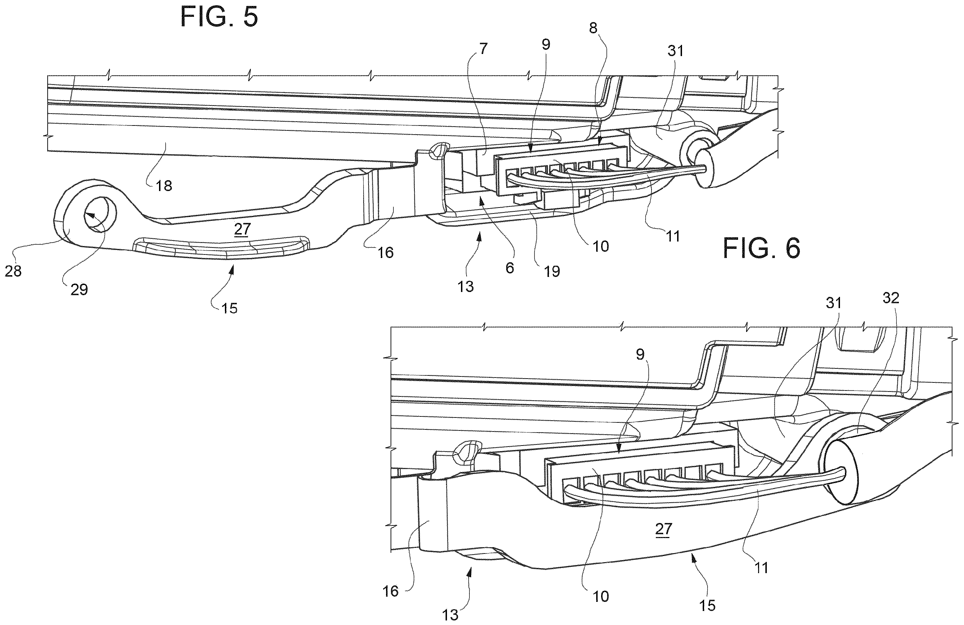

The abutment wall 15 is movable between a rest position shown in Figure 2 (or in Figure 5 with regard to the second embodiment), wherein the integral portion 16 is not deformed and the seat 14 is accessible from the outside of the support bracket 13, and a use position shown in Figure 4 (or in Figure 6 with regard to the second embodiment), wherein the integral portion 16 is bent and the abutment wall 15 is arranged to at least partially close the seat 14 and faces/is arranged in contact with the rectangular rear wall 10. The uncoupling of the second connector 8 from the first connector 6 is thus prevented, since the abutment wall 15 is positioned against the rectangular rear wall 10. In greater detail, the support bracket 13 is substantially U-shaped and comprises two rectilinear side elements 17 that extend integrally from a peripheral portion 18 of the casing 2, and a rectilinear element 19 that extends integrally between the side elements 17. In the embodiment of Figures 2 and 4, the integral portion 16 having a reduced thickness is formed by a rectangular wall and extends integrally from a central portion of the edge of the rectilinear element 19.

Always according to the embodiment of Figures 2 and 4, the abutment wall 15 comprises a rectangular wall 21 having a larger edge integral with a larger side edge of the rectangular portion 16 having a reduced thickness and two integral end portions 23, each provided with a circular through hole 22.

The bracket 13 further comprises a pair of cylindrical tubular bodies 24 (Figure 2) having respective axes, which are coaxial with the axes of the circular through holes 22 when the abutment wall 15 is arranged in the use position. These tubular bodies 24 are designed to house the threaded stem of screws (Figure 4) having end portions of the stem engaging the holes 22. The screws are provided with heads 25, which come into contact with the end portions 23 in order to provide a stable mechanical connection between the end portions 23 of said abutment wall 15 and the support bracket 13.

In the embodiment of Figures 5 and 6, the integral portion 16 having a reduced thickness is formed by a rectangular wall and integrally extends from an edge portion of a rectilinear side element 17.

Always according to the embodiment of Figures 5 and 6, the abutment wall 15 comprises an elongated rectilinear wall 27 having a smaller edge integral with a side edge of the rectangular portion having a reduced thickness 16 and an integral end portion 28 provided with a circular through hole 29.

The bracket 13 further includes a cylindrical tubular body 31 (Figure 5) having an axis coaxial with the axis of the circular through hole 29 when the abutment wall 15 is arranged in the use position.

Also in this case, the tubular body 31 is designed to house the threaded stem of a screw (Figure 6) having end portions of the stem that engage the hole 29. The screw is provided with a head 32, which abuts against the end portion 28 in order to create a stable mechanical connection between the end portion 28 of said abutment wall 15 and the support bracket 13.

With reference to Figure 2, a pair of cylindrical appendages 40 are provided that extend integrally to the bracket 13 alongside the cylindrical bodies 24. Each cylindrical appendage 40 is provided with a substantially spherical end portion 41, which protrudes from the seat 14. The abutment wall 15 has a pair of through openings 42 arranged beside the openings 22 and having a smaller diameter than these latter. In particular, the diameter of the openings 42 is close to the diameter of the end portion 14. The openings 42 are suitable for housing the respective end portions 41 with a press fit interference before the abutment wall 15 is arranged so as to completely close the seat 14.

In use, when the integral portion 16 is inflected, it is rectilinear (see Figure 2) and keeps the abutment wall 15 below the bracket 13. In this position, the seat 14 is completely accessible from the outside of the support bracket 13. An operator (or a robot) can couple the connectors 6 and 8 by inserting the second connector 8 in the seat 14. Then the operator grasps the abutment wall 15 and rotates it until the ends 41 are arranged in the holes 42, thus creating a pre-hooking position in which the abutment wall 15 is already facing the seat 14 and the holes 22 face the cylindrical tubular bodies 24. The screws are then inserted into the holes 22 by screwing them until the heads 25 press the abutment wall 15 on the bracket 13. The abutment wall 15 abuts against the wall 10 of the second connector 8, thus preventing any movement of this latter with respect to the first connector 6.

A further advantage of the described solutions consists in that the locking element - the abutment wall 15, which is very small, is secured to the headlight body, thus avoiding any risk of it being lost or any need to bring it in line as an independent element and then insert it on site where spaces are limited.

Therefore, all the purposes of the invention are achieved.

## Claims

1. A lighting device for a vehicle, in particular a headlight for a motor vehicle, comprising a cup-shaped casing (2) housing at least a light source and a transparent element (3) arranged so as to close a front opening of the cup-shaped casing (2), said lighting device being provided with a first connector (6) externally carried by said casing (2) designed to be coupled to a second connector (8), complementary to the first connector and designed to provide an electric connection to said light source and/or to possible attachments, said second connector (8) comprising an insulating casing (9) provided with a rear wall (10) from which a plurality of electric cables emerge,
wherein said casing (2) integrally comprises a support bracket (13) designed to define a seat (14) for stably housing said first connector (6); said support bracket (13) being provided with an abutment wall (15) integrally connected to said support bracket (13);said abutment wall (15) being movable between a rest position wherein the seat (14) is accessible from the outside of the support bracket (13) and a use position wherein said abutment wall (15) is arranged to at least partially close said seat (14) and faces the rear wall (10) of the second connector; **characterised in that:**
i)- the abutment wall (15) is integrally connected to said support bracket (13) through an integral portion (16) having a reduced thickness with respect to the abutment wall (15) to provide an integral hinge of the film-type;
ii)- in said rest position said integral portion (16) is not deformed;
iii)- in said use position said integral portion is bent:
iv)- connection means are arranged to provide a stable mechanical connection between at least an end portion (23, 28) of said abutment wall (15) and the support bracket (13);
v)- the connection means comprise a seat made in said support bracket (13), a threaded element designed to be screwed into said seat and provided with a stem that engages a through hole (22, 29) of said abutment wall (15) and a head (25, 32) designed to be in abutment against the end portion (23, 28) of said abutment wall (15).

2. The lighting device according to claim 1, wherein said support bracket (13) is substantially U-shaped and comprises two side elements (17) that integrally extend from a peripheral portion (18) of said cup-shaped casing (2) and a rectilinear element (19) that integrally extends between the side elements (17); wherein said portion having a reduced thickness (16) integrally extends from an edge of the rectilinear element (19).

3. The lighting device according to claim 1, wherein said support bracket (13) is substantially U-shaped and comprises two side elements (17) that integrally extend from a peripheral portion (18) of said cup-shaped casing (2) and a rectilinear element (19) that integrally extends between the side elements (17), wherein said portion having a reduced thickness (16) integrally extends from a side element (17).

4. The lighting device according to claim 1, wherein the support bracket is provided with pre-hooking means (40) designed to create an interference fit connection between said support bracket (13) and said abutment wall (15) before the abutment wall is arranged so as to completely close said seat (14).

5. The lighting device according to claim 4, wherein said pre-hooking means comprise at least a cylindrical appendage (40) that extends from said support bracket (13) and is provided with an end portion (14) that protrudes from said seat (14); wherein said abutment wall (15) has at least an opening (42) within which said end portion (41) is designed to perform an interference press fit before the abutment wall (15) is arranged so as to completely close said seat.

6. A vehicle comprising a lighting device, either consisting of a headlight or lamp, the lighting device being made according to any one of the preceding claims.

## Patentansprüche

1. Beleuchtungsvorrichtung für ein Fahrzeug, insbesondere ein Scheinwerfer für ein Kraftfahrzeug, enthaltend ein becherförmiges Gehäuse (2), in dem mindestens eine Lichtquelle untergebracht ist, und ein transparentes Element (3), das so angeordnet ist, dass es eine vordere Öffnung des becherförmigen Gehäuses (2) verschließt, wobei die Beleuchtungsvorrichtung mit einer ersten Verbindungseinrichtung (6) versehen ist, die von dem Gehäuse (2) außen getragen wird und dafür gestaltet ist, mit einer zweiten Verbindungseinrichtung (8) verbunden zu werden, die zu der ersten Verbindungseinrichtung komplementär ist und dafür gestaltet ist, für die Lichtquelle und/oder mögliche Anbauelemente eine elektrische Verbindung zu schaffen, wobei die zweite Verbindungseinrichtung (8) ein isoliertes Gehäuse (9) aufweist, das mit einer Rückwand (10) versehen ist, aus welcher eine Vielzahl von elektrischen Kabeln austreten,
wobei das Gehäuse (2) eine integrierte Halterung (13) aufweist, die dafür konstruiert ist, einen Sitz (14) zur stabilen Aufnahme der ersten Verbindungseinrichtung (6) zu bilden; wobei die Halterung (13) mit einer Anlegewand (15) versehen ist, die mit der Halterung (13) einstückig verbunden ist; wobei die Anlegewand (15) zwischen einer Ruhestellung, in welcher der Sitz (14) von außerhalb der Halterung (13) zugänglich ist, und einer Betriebsstellung, in welcher die Anlegewand (15) so angeordnet ist, dass sie zumindest teilweise den Sitz (14) verschließt und der Rückwand (10) der zweiten Verbindungseinrichtung gegenüberliegt, beweglich ist, **dadurch gekennzeichnet, dass**:
i) - die Anlegewand (15) mit der Halterung (13) durch einen einstückigen Teil (16) mit verringerter Dicke in Relation zu der Anlegewand (15) einstückig verbunden ist, um ein integriertes Folienscharnier zu bilden;
ii) - der einstückige Teil (16) in der Ruhestellung nicht verformt ist;
iii) - in der Betriebsstellung der einstückige Teil gebogen ist;
iv) - Verbindungseinrichtungen vorgesehen sind, um eine stabile mechanische Verbindung zwischen mindestens einem Endteil (23, 28) der Anlegewand (15) und der Halterung (13) zu schaffen;
v) - die Verbindungseinrichtung einen in der Halterung (13) ausgebildeten Sitz und ein für das Einschrauben in den Sitz konstruiertes und mit einem Schaft, der in eine Durchgangsöffnung (22, 29) der Anlegewand (15) eingreift, und einem Kopf (25, 32), der dafür konstruiert ist, an dem Endteil (23, 28) der Anlegewand (15) zur Anlage zu kommen, versehenes Gewindeelement umfasst.

2. Beleuchtungsvorrichtung nach Anspruch 1, wobei die Halterung (13) im Wesentlichen U-förmig ist und zwei Seitenelemente (17) aufweist, die einstückig von einem Umfangsteil (18) des becherförmigen Gehäuses (2) ausgehen, sowie ein geradliniges Element (19), das einstückig zwischen den Seitenelementen (17) verläuft; wobei der Teil, der eine verringerte Dicke (16) aufweist, einstückig von einem Rand des geradlinigen Elements (19) ausgeht.

3. Beleuchtungsvorrichtung nach Anspruch 1, wobei die Halterung (13) im Wesentlichen U-förmig ist und zwei Seitenelemente (17) aufweist, die einstückig von einem Umfangsteil (18) des becherförmigen Gehäuses (2) ausgehen, und ein geradliniges Element (19), das einstückig zwischen den Seitenelementen (17) verläuft, wobei der Teil mit verringerter Dicke (16) einstückig von einem Seitenelement (17) ausgeht.

4. Beleuchtungsvorrichtung nach Anspruch 1, wobei die Halterung mit Vorab-Einhakelementen (40) versehen ist, die dafür gestaltet sind, eine Presssitzverbindung zwischen der Halterung (13) und der Anlegewand (15) zu schaffen, bevor die Anlegewand so angeordnet wird, dass sie den Sitz (14) vollständig verschließt.

5. Beleuchtungsvorrichtung nach Anspruch 4, wobei das Vorab-Einhakelement mindestens einen zylindrischen Anhang (40) aufweist, der von der Halterung (13) ausgeht und mit einem Endteil (14) versehen ist, der von dem Sitz (14) vorspringt; wobei die Anlegewand (15) mindestens eine Öffnung (42) hat, in welcher der Endteil (41) konstruktionsgemäß eine Presspassung bildet, bevor die Anlegewand (15) so angeordnet wird, dass sie den Sitz vollständig verschließt.

6. Fahrzeug, enthaltend eine Beleuchtungsvorrichtung, entweder bestehend aus einem Scheinwerfer oder einer Lampe, wobei die Beleuchtungsvorrichtung nach einem der vorhergehenden Ansprüche hergestellt ist.

## Revendications

1. Dispositif d'éclairage pour un véhicule, en particulier un phare pour un véhicule à moteur, comprenant un carter en forme de coupelle (2) logeant au moins une source de lumière et un élément transparent (3) agencé afin de fermer une ouverture avant du carter en forme de coupelle (2), ledit dispositif d'éclairage étant prévu avec un premier connecteur (6) extérieurement porté par ledit carter (2) conçu pour être couplé à un second connecteur (8), complémentaire par rapport au premier connecteur et conçu pour fournir un raccordement électrique à ladite source de lumière et/ou aux fixations éventuelles, ledit second connecteur (8) comprenant un carter isolant (9) prévu avec une paroi arrière (10) de laquelle sort une pluralité de câbles électriques,
dans lequel ledit carter (2) comprend, de manière solidaire, une console de support (13) conçue pour définir un siège (14) afin de loger, de manière stable, ledit premier connecteur (6) ; ladite console de support (13) étant prévue avec une paroi de butée (15) raccordée, de manière solidaire, à ladite console de support (13) ; ladite paroi de butée (15) étant mobile entre une position de repos dans laquelle le siège (14) est accessible depuis l'extérieur de la console de support (13) et une position d'utilisation dans laquelle ladite paroi de butée (15) est agencée pour fermer au moins partiellement ledit siège (14) et fait face à la paroi arrière (10) du second connecteur ; **caractérisé en ce que** :
i) la paroi de butée (15) est raccordée, de manière solidaire, à ladite console de support (13) par une partie solidaire (16) ayant une épaisseur réduite par rapport à la paroi de butée (15) pour fournir une charnière solidaire du type à film ;
ii) dans ladite position de repos, ladite partie solidaire (16) n'est pas déformée ;
iii) dans ladite position d'utilisation, ladite partie solidaire est pliée ;
iv) des moyens de raccordement sont agencés pour fournir un raccordement mécanique stable entre au moins une partie d'extrémité (23, 28) de ladite paroi de butée (15) et la console de support (13) ;
v) les moyens de raccordement comprennent un siège réalisé dans ladite console de support (13),
un élément fileté conçu pour être vissé dans ledit siège et prévu avec une tige qui met en prise un trou débouchant (22, 29) de ladite paroi de butée (15) et une tête (25, 32) conçue pour venir en butée contre la partie d'extrémité (23, 28) de ladite paroi de butée (15).

2. Dispositif d'éclairage selon la revendication 1, dans lequel ladite console de support (13) est sensiblement en forme de U et comprend :
deux éléments latéraux (17) qui s'étendent, de manière solidaire, à partir d'une partie périphérique (18) dudit carter en forme de coupelle (2) et un élément rectiligne (19) qui s'étend, de manière solidaire, entre les éléments latéraux (17) ; dans lequel ladite partie ayant une épaisseur déduite (16) s'étend, de manière solidaire, à partir d'un bord de l'élément rectiligne (19).

3. Dispositif d'éclairage selon la revendication 1, dans lequel ladite console de support (13) est sensiblement en forme de U et comprend deux éléments latéraux (17) qui s'étendent de manière solidaire à partir d'une partie périphérique (18) dudit carter en forme de coupelle (2) et un élément rectiligne (19) qui s'étend, de manière solidaire, avec les éléments latéraux (17), dans lequel ladite partie ayant une épaisseur (16) réduite s'étend de manière solidaire à partir d'un élément latéral (17).

4. Dispositif d'éclairage selon la revendication 1, dans lequel la console de support est prévue avec des moyens de pré-accrochage (40) conçus pour créer un raccordement ajusté avec serrage entre ladite console de support (13) et ladite paroi de butée (15) avant que la paroi de butée ne soit agencée pour fermer complètement ledit siège (14).

5. Dispositif d'éclairage selon la revendication 4, dans lequel lesdits moyens de pré-accrochage comprennent au moins un appendice cylindrique (40) qui s'étend à partir de ladite console de support (13) et est prévu avec une partie d'extrémité (14) qui fait saillie dudit siège (14) ; dans lequel ladite paroi de butée (15) a au moins une ouverture (42) dans laquelle la partie d'extrémité (41) est conçue pour réaliser un ajustement à la presse avec serrage avant que la paroi de butée (15) ne soit agencée pour fermer complètement ledit siège.

6. Véhicule comprenant un dispositif d'éclairage, se composant d'un phare ou d'une lampe, le dispositif d'éclairage étant réalisé selon l'une quelconque des revendications précédentes.
